# EUROPÄISCHE PATENTSCHRIFT

(11) **EP 0 448 946 B1**
(45) Veröffentlichungstag und Bekanntmachung des Hinweises auf die Patenterteilung: **05.10.1994**
(21) Anmeldenummer: 91102065.9
(22) Anmeldetag: 14.02.1991
(51) Int. Cl.: C01G 19/02, H01B 1/08, C09D 5/24, G03G 9/097, C09C 1/00, C08K 3/00, D01F 1/09

(54) **Elektrisch leitfähiges Zinn-IV-oxid**
Electrically conductive stannic oxide
Oxyde stanneux électroconducteur

(30) Priorität: 26.02.1990 DE 4006044
(43) Veröffentlichungstag der Anmeldung: 02.10.1991
(73) Patentinhaber: Th. Goldschmidt AG, 45127 Essen (DE)
(72) Erfinder: Ruf, Erich, Dr., W-4300 Essen (DE); Giersberg, Joachim, W-4370 Marl-Sinsen (DE); Gomm, Hartmut, W-4330 Mülheim 13 (DE); Dembinski, Gerd, W-4300 Essen (DE); Krohm, Hans-Günter, W-4285 Raesfeld-Erle (DE)

(56) Entgegenhaltungen:
- FR-A- 2 619 732
- GB-A- 1 517 341
- GB-A- 2 080 275

## Beschreibung

Die Erfindung betrifft ein Verfahren zur Herstellung eines elektrisch leitfähigen Zinn-IV-oxids mit höchstens 2 % zweiwertigem Zinn und 0,1 bis 2,5 % Halogeniden.

Es ist seit langem bekannt, elektrisch leitfähige und infrarotreflektierende Zinnoxidschichten auf Substrate, insbesondere auf Glas, aufzubringen. Vielfach erfolgt die Herstellung solcher auf Substrate bzw. auf Glas aufgebrachten elektrisch leitfähigen und infrarotreflektierenden Zinnoxidschichten durch pyrolytische Zersetzung von flüssigen Zubereitungen, die im wesentlichen eine oder mehrere Basis-Zinnverbindungen und eine oder mehrere geeignete fluoridhaltige Dotierungsverbindungen enthalten.

Über solche substratgebundene, elektrisch leitfähige und infrarotreflektierende Zinnoxidschichten bzw. über die hierfür zum Einsatz kommenden flüssigen Zubereitungen gibt es eine Vielzahl Veröffentlichungen und Patente.

Solche Zubereitungen werden vielfach im Sprühzerstäubungsverfahren auf zuvor erhitzte Substrate, insbesondere auf zuvor erhitztes Glas, aufgebracht. Hierdurch werden durch pyrolytische bzw. pyrogene Zersetzung der in solchen Zubereitungen vorhandenen Verbindungen elektrisch leitfähige, infrarotreflektierende, jedoch substratgebundene Zinnoxidschichten erzeugt.

Die elektrische Leitfähigkeit wird durch Fehlstellen in den jeweiligen Zinnoxidschichten, wobei solche Fehlstellen zum größten Teil durch die zugesetzten Dotierungsmittel gebildet werden, erzeugt. Hierbei werden nur wenig unterhalb des Leitungsbandes Störstellenterme resp. Donatorterme erzeugt, aus denen gegebenenfalls unter geringem Energieaufwand Elektronen in das Leitungsband gebracht werden können. Dies ist bei reinem, undotiertem Zinnoxid aufgrund der zwischen Valenzband und Leitungsband vorhandenen verbotenen Zone nicht der Fall.

Im Hinblick auf elektrische Leitfähigkeit bzw. einer antistatischen Einstellung von verschiedenen festen und flüssigen technischen Produkten, wie z. B. Kunststoffe, Lacke und Farben, Papiere, Toner und Textilien, werden elektrisch leitfähige Pigmente benötigt. Neben Metallpulvern und Graphit, die zwangsläufig eine dunkle Einfärbung solcher technischen Produkte nach sich ziehen, werden vielfach pulverförmige Halbleiter zum Einsatz gebracht. Hierbei ist es wünschenswert, möglichst weiße resp. hellfarbene, feinkörnige Halbleiterpigmente mit hoher elektrischer Leitfähigkeit bzw. geringem spezifischen Widerstand einsetzen zu können.

Antimondotierte leitfähige Zinnoxide sind bereits als solche und auf Trägermaterialien, wie z. B. Titanoxid aufgebracht, bekannt. Solche elektrisch leitfähigen Zinnoxide weisen jedoch Nachteile auf. Aufgrund der Antimondotierung sind solche leitfähigen Zinnoxide je nach Antimongehalt und Glühtemperatur unterschiedlich stark blau eingefärbt. Ferner kommt hinzu, daß antimonoxidhaltige Zinnoxide sowie allgemein antimonoxidhaltige Stoffe heute arbeitsmedizinisch nicht unbedenklich erscheinen.

In der GB-A-1 517 341 wird eine Lösung beschrieben, die ein thermisch zersetzbares Zinnsalz enthält, welches u.a. mit Antimonfluorid oder Flußsäure dotiert sein kann. Es werden dabei transparente Zinnoxidfilme auf der Glasoberfläche erhalten. Als Lösungsmittel werden Ether, Ester oder Alkohole verwendet.

Weiter wird in der GB-A-2 080 275 ein leitfähiges Element beschrieben, auf dem sich eine Schicht aus polykristallinem Zinnoxid befindet, welches mit Zinnfluorid dotiert ist.

Der Erfindung liegt die Aufgabe zugrunde, halogeniddotierte, möglichst hellfarbene Zinn-IV-oxide bereitzustellen, die möglichst einfach und aus gut zugänglichen Rohstoffen herstellbar sind.

Das erfindungsgemäße Verfahren ist dadurch gekennzeichnet, daß man Zinn-II-oxid oder Zinn-IV-oxid mit, bezogen auf Gemisch, bis zu 20 Gew.-% Zinn-II-fluorid oder einer äquivalenten Menge Flußsäure mahlend vermischt, das Gemisch in einem Temperaturbereich von 200 bis 700° C glüht und das Glühprodukt bis zum Erreichen der gewünschten Teilchengröße mahlt.

Vorzugsweise setzt man dem Gemisch aus Zinn-II-oxid und Zinn-II-fluorid bzw. Flußsäure niedermolekulare Alkohole zu. Als Alkohole verwendet man insbesondere Methanol oder Ethanol.

Anstelle des festen Zinn-II-oxids kann man auch frisch gefällte Zinn-II-hydroxide oder basische Zinn-II-hydroxidprodukte mit festem Zinn-II-fluorid umsetzen.

Man kann auch Gemische von Zinn-II-oxid und Zinn-IV-oxid bei dem erfindungsgemäßen Verfahren einsetzen.

Ein anderes erfindungsgemäßes Verfahren besteht darin, daß man zunächst in an sich bekannter Weise aus Zinn-II-salzlösungen basische Zinn-II-verbindungen und/oder basische Zinn-II-hydroxide ausfällt, die erhaltenen Fällungsprodukte mehrmals auswäscht, sodann diese mit 5 bis 70 Gew.-%, bezogen auf ausgefällte basische Zinn-II-verbindungen, Zinn-II-fluorid in Form einer wäßrigen Lösung während eines Zeitraumes von 5 bis 60 Minuten rührt, die dotierten Fällungsprodukte von der Lösung abtrennt, auswäscht, bei Temperaturen von 100 bis 200° C trocknet, dann bei Temperaturen von 200 bis 700° C glüht und das Glühprodukt bis zum Erreichen der gewünschten Teilchengröße mahlt.

Es ist auch möglich, daß man in an sich bekannter Weise aus Zinn-II-salzlösungen basische Zinn-II-verbindungen und/oder basische Zinn-II-hydroxide ausfällt, die Fällung in Gegenwart von 1 bis 70 Gew.-%, bezogen auf ausgefällte basische Zinn-II-verbindungen, Zinn-II-fluorid durchführt und die dotierten Fällungsprodukte von der Lösung abtrennt, auswäscht, bei Temperaturen von 100 bis 200° C trocknet, dann bei Temperaturen von 200 bis 700° C glüht und das Glühprodukt bis zum Erreichen der gewünschten Teilchengröße mahlt.

Ein weiteres erfindungsgemäßes Verfahren ist dadurch gekennzeichnet, daß man in wäßrige Zinn-II-halogenidlösungen 10 bis 100 Gew.-%, bezogen auf Zinn-II-halogenid, Alkylenoxid einleitet, die erhaltenen Fällungsprodukte von der Lösung abtrennt, auswäscht, bei Temperaturen von 100 bis 200° C trocknet, dann bei Temperaturen von 200 bis 700° C glüht und das Glühprodukt bis zum Erreichen der gewünschten Teilchengröße mahlt.

Als Alkylenoxid verwendet man insbesondere Ethylenoxid. Leitet man in eine Zinn-II-chloridlösung, die zur Dotierung ausreichende Mengen Zinn-II-fluorid gelöst enthält, Ethylenoxid ein, fällt Zinn-II-hydroxidchlorid, gegebenenfalls mit etwas Zinn-II-hydroxid, praktisch quantitativ aus.

Hierbei wird gleichzeitig Ethylenchlorhydrin, das in der wäßrigen Phase verbleibt, gebildet. Wird dieses Fällprodukt gewaschen und zwischen 100 bis 250° C, vorzugsweise bei ca. 200° C getrocknet und anschließend in vorerwähnter Weise geglüht, so erhält man hierbei ein sehr gutes elektrisch leitfähiges Zinnoxid, das im Hinblick auf gewünschte Feinheit noch zusätzlich gemahlen werden kann.

Wird diese eben erwähnte Fällung durch Einleiten von Alkylenoxid zweckmäßigerweise Ethylenoxid ohne vorheriges Lösen von Zinn-II-fluorid vorgenommen, so wird ein fluoridfreies Zinn-II-chloridhydroxid ausgefällt, das gegebenenfalls noch etwas Zinn-II-hydroxid enthalten kann. Wird dieses Produkt nach mehrmaligem Waschen und anschließender Trocknung in vorerwähnter Weise geglüht, so wird hierbei ein fluoridfreies chloriddotiertes elektrisch leitfähiges Zinnoxid erhalten.

Chlorid- und/oder bromid- resp. jodiddotierte elektrisch leitfähige Zinnoxide werden in einfacher Weise auch dadurch hergestellt, daß man Mischungen von Zinn-II-oxid und Zinn-IV-oxid mit, bezogen auf Gemisch, bis zu 20 Gew.-% Zinn-II-halogeniden mahlend vermischt, das Gemisch in einem Temperaturbereich von 200 bis 700° C glüht und das Glühprodukt bis zum Erreichen der gewünschten Teilchengröße mahlt.

Die erfindungsgemäß hergestellten halogeniddotierten elektrisch leitfähigen Zinnoxide sind je nach Herstellung, Art und Menge der Dotierung grau bis hellfarben. Innerhalb der halogeniddotierten elektrisch leitfähigen Zinnoxide sind die mit Fluorid dotierten denen mit Chlorid, Bromid und Jodid dotierten in der elektrischen Leitfähigkeit und in ihrer Temperaturbeständigkeit etwas überlegen. Demgegenüber sind die Chlorid- und/oder Bromid- resp. Jodiddotierten den Fluoriddotierten im farblichen Aussehen insofern überlegen, als diese heller sind.

Die erfindungsgemäß hergestellten leitfähigen Zinn-IV-oxide weisen einen spezifischen Widerstand von < 50 Ω . m auf, wobei die gemessenen Werte bei fluordotiertem Zinn-IV-oxid meist < 10 Ω . m, insbesondere etwa 0,3 bis 2 Ω . m betragen.

Die erfindungsgemäß hergestellten Verbindungen können aufgrund ihrer besonderen physikalischen Eigenschaften insbesondere als Füllstoff oder Pigment in Kunstoffen, Lacken, Farben, Papier, Textilien und Tonern verwendet werden.

Den erfindungsgemäßen Verfahren ist gemeinsam, daß die auf verschiedene Weise erhaltenen Produkte geglüht werden. Dieses Glühen erfolgt, wie bereits angegeben, bei etwa 200 bis 600° C. Bevorzugt ist ein Bereich von etwa 300 bis 500° C.

Die erfindungsgemäß hergestellten halogeniddotierten elektrisch leitfähigen Zinnoxide sowie die unterschiedlichen Herstellungsverfahren werden durch nachfolgende Beispiele näher erläutert.

### Beispiel 1

In einer Mörsermühle werden 250 g Zinn-II-oxid, 29,5 g Zinn-II-fluorid und 11,7 g Methanol durch 10minütiges Mahlen innig miteinander gemischt. Das so erhaltene Substanzgemisch wird anschließend in einer Korundschale 1 Stunde bei 500° C geglüht, wobei das Glühprodukt während der Glühzeit einmal krählend gemischt wird. Nach dem Erkalten wird das Glühprodukt nochmals in einer Mörsermühle 10 Minuten lang gemahlen.

Das so erhaltene elektrisch leitfähige Zinnoxid weist einen spezifischen Widerstand von 1,3 Ω . m auf.

| | |
|---|---|
| Der Zinn-II-gehalt beträgt | < 0,3 %. |
| Der Fluoridgehalt beträgt | 0,9 %. |

### Beispiel 2

In einer Mörsermühle werden 250 g Zinn-II-oxid, 14,75 g Zinn-II-chlorid und 14,75 g Zinn-II-fluorid durch 10minütiges Mahlen innig miteinander vermischt. Die so erhaltene Stoffmischung wird in einer Korundschale 1 Stunde bei 300° C geglüht. Nach dem Erkalten wird das so erhaltene elektrisch leitfähige Zinnoxid nochmals 10 Minuten in einer Mörsermühle gemahlen.

Das erhaltene elektrisch leitfähige Zinnoxid weist einen spezifischen Widerstand von 1 Ω . m auf.

| | |
|---|---|
| Der Zinn-II-gehalt beträgt | 0,8 %. |
| Der Fluoridgehalt liegt bei | 0,49 %. |
| Der Chloridgehalt liegt bei | 0,3 %. |

### Beispiel 3

In einer Mörsermühle werden 125 g Zinn-IV-oxid und 14,75 g Zinn-II-fluorid durch 10minütiges Mahlen innig miteinander vermischt. Die so erhaltene Stoffmischung wird anschließend in einer Korundschale 1 Stunde bei 300° C geglüht. Das Glühprodukt wird nach dem Erkalten nochmals in einer Mörsermühle 10 Minuten lang gemahlen.

Das so erhaltene elektrisch leitfähige Zinnoxid weist einen spezifischen Widerstand von 12 Ω . m auf.

| | |
|---|---|
| Der Zinn-II-gehalt beträgt | < 0,3 %. |
| Der Fluoridgehalt beträgt | 0,9 %. |

### Beispiel 4

250 g Zinn-II-oxid werden in einem Becherglas mit einer 70 %igen methanolischen Zinn-II-chloridlösung 20 Minuten lang gerührt. Im Anschluß daran wird die überstehende wäßrige Phase abdekantiert. Das so erhaltene Produkt wird 1 Stunde bei 200° C getrocknet und anschließend in einer Korundschale 1 Stunde bei 500° C geglüht. Während der Glühzeit wird das Produkt einmal krählend gemischt. Nach dem Erkalten wird das Glühprodukt in einer Mörsermühle gemahlen.

Das so erhaltene elektrisch leitfähige Zinnoxid weist einen spezifischen Widerstand von 8 Ω . m auf.

| | |
|---|---|
| Der Zinn-II-gehalt beträgt | 0,5 %. |
| Der Chloridgehalt beträgt | < 0,3 %. |

### Beispiel 5

In einer Mörsermühle werden 250 g Zinn-II-oxid und 29,5 g Zinn-II-jodid durch 10minütiges Mahlen innig miteinander gemischt. Das so erhaltene Stoffgemisch wird in einer Korundschale 1 Stunde bei 500° C geglüht. Während der Glühzeit wird das Produkt einmal krählend gemischt. Anschließend wird das Glühprodukt nach dem Erkalten nochmals 10 Minuten lang in einer Mörsermühle gemahlen.

Es wird ein elektrisch leitfähiges Zinnoxid erhalten, das einen spezifischen Widerstand von 36 Ω . m aufweist.

| | |
|---|---|
| Der Zinn-II-gehalt beträgt | 1,8 %. |
| Der Jodidgehalt beträgt | 1,2 %. |

### Beispiel 6

In einer Mörsermühle werden 250 g Zinn-II-oxid und 34,0 g Bromwasserstoffsäure (48 %ig) durch 10minütiges Mahlen innig miteinander vermischt. Das so erhaltene Stoffgemisch wird in einer Korundschale 1 Stunde bei 500° C geglüht. Während der Glühzeit wird das Produkt einmal krählend gemischt. Das Glühprodukt wird nach dem Erkalten nochmals 10 Minuten lang in einer Mörsermühle gemahlen.

Das so erhaltene elektrisch leitfähige Zinnoxid weist einen spezifischen Widerstand von 40 Ω . m auf.

| | |
|---|---|
| Der Zinn-II-gehalt beträgt | < 0,3 %. |
| Der Bromidgehalt beträgt | 1,0 %. |

### Beispiel 7

In einem 2-l-Vierhalskolben mit Rückflußkühler, Thermometer, Rührer und Schliffstopfen werden 670 g wäßrige Zinn-II-chloridlösung (38,3 %ig) vorgelegt. Dazu werden unter Rühren 28,4 g festes Zinn-II-fluorid gegeben. Diese Stoffmischung wird so lange gerührt (ca. 20 Minuten), bis eine nahezu klare Lösung erhalten wird. In diese Lösung werden 101,2 g Ethylenoxid langsam eingeleitet (innerhalb von 5 Stunden). Aufgrund der exothermen Reaktion erwärmt sich die Reaktionsmischung auf ca. 45° C.

Nach wenigen Minuten Einleitungszeit wird basisches Zinn-II-chlorid mit kleinen Mengen Zinn-II-hydroxid unter gleichzeitiger Bildung von Ethylenchlorhydrin ausgefällt. Nach Einleiten der gesamten Ethylenoxidmenge wird das so erhaltene Fällprodukt abgenutscht. Nach zweimaligem Waschen mit jeweils ca. 250 ml Wasser wird das Produkt im Rotationsverdampfer im Vakuum (3 mm Hg) 2 Stunden lang getrocknet.

Das so erhaltene Produkt wird anschließend in einer Korundschale 1 Stunde bei 500° C geglüht. Während der Glühzeit wird das Produkt einmal krählend gemischt. Das Glühprodukt wird nach dem Erkalten 10 Minuten lang in einer Mörsermühle gemahlen.

Es wird ein elektrisch leitfähiges Zinnoxid mit einem spezifischen Widerstand von 2 Ω . m erhalten.

| | |
|---|---|
| Der Zinn-II-gehalt beträgt | < 0,3 %. |
| Der Chloridgehalt beträgt | 0,5 %. |
| Der Fluoridgehalt beträgt | 1,2 %. |

### Beispiel 8

Es wird in analoger Weise wie bei Versuch 7 gearbeitet, jedoch ohne Einsatz von Zinn-II-fluorid.

Hierbei wird ein elektrisch leitfähiges Zinnoxid mit einem spezifischen Widerstand von 12 Ω . m erhalten.

| | |
|---|---|
| Der Zinn-II-gehalt beträgt | < 0,3 %. |
| Der Chloridgehalt beträgt | 0,4 %. |

### Beispiel 9

In einem 3-l-Becherglas werden 950 ml Zinnsulfatlösung mit 125 g Sn(II)/l und 400 ml einer 20 %igen Zinn-II-fluoridlösung unter Rühren vermischt.

Zu dieser Mischung werden unter Rühren 950 ml einer 16,5 %igen Ammoniumhydrogencarbonatlösung bei Raumtemperatur zugegeben.

Es wird ein weißes Fällprodukt erhalten das fünfmal mit jeweils 2,5 l Wasser dekantierend gewaschen wird. Das so gewaschene Fällprodukt wird anschließend in einer Porzellanschale bei 110° C (12 Stunden) getrocknet und dann in einem Korundtiegel bei 500° C 1 Stunde geglüht. Während der Glühzeit wird das Produkt einmal krählend gemischt. Nach dem Glühen und Erkalten wird das Produkt über ein 630-µm-Sieb abgesiebt und der Siebdurchgang nochmals 15 Minuten bei 500° C geglüht. Dieses so erhaltene Glühprodukt wird über ein 100-µm-Sieb abgesiebt.

Das so als Siebdurchgang erhaltene elektrisch leitfähige Zinnoxid hat einen spezifischen Widerstand von 0,3 Ω . m.

| | |
|---|---|
| Der Zinn-II-gehalt beträgt | < 0,3 %. |
| Der Fluoridgehalt beträgt | 1 %. |

## Patentansprüche

1. Verfahren zur Herstellung eines elektrisch leitfähigen Zinn-IV-oxids mit höchstens 2 % zweiwertigem Zinn und 0,1 bis 2,5 % Halogeniden, dadurch gekennzeichnet, daß man Zinn-II-oxid oder Zinn-IV-oxid mit, bezogen auf Gemisch, bis zu 20 Gew.-% Zinn-II-fluorid oder einer äquivalenten Menge Flußsäure mahlend vermischt, das Gemisch in einem Temperaturbereich von 200 bis 700° C glüht und das Glühprodukt bis zum Erreichen der gewünschten Teilchengröße mahlt.

2. Verfahren nach Anspruch 1, dadurch gekennzeichnet, daß man dem Gemisch aus Zinn-II-oxid und Zinn-II-fluorid bzw. Flußsäure niedermolekulare Alkohole zusetzt.

3. Verfahren nach Anspruch 2, dadurch gekennzeichnet, daß man dem Gemisch Methanol oder Ethanol zusetzt.

4. Verfahren zur Herstellung eines elektrisch leitfähigen Zinn-IV-oxids mit höchstens 2 % zweiwertigem Zinn und 0,1 bis 2,5 % Halogeniden, dadurch gekennzeichnet, daß man zunächst in an sich bekannter Weise aus Zinn-II-salzlösungen basische Zinn-II-verbindungen und/oder basische Zinn-II-hydroxide ausfällt, die erhaltenen Fällungsprodukte mehrmals auswäscht, sodann diese mit 5 bis 70 Gew.-%, bezogen auf ausgefällte basische Zinn-II-verbindungen, Zinn-II-fluorid in Form einer wäßrigen Lösung während eines Zeitraumes von 5 bis 60 Minuten rührt, die dotierten Fällungsprodukte von der Lösung abtrennt, auswäscht, bei Temperaturen von 100 bis 200° C trocknet, dann bei Temperaturen von 200 bis 700° C glüht und das Glühprodukt bis zum Erreichen der gewünschten Teilchengröße mahlt.

5. Verfahren zur Herstellung eines elektrisch leitfähigen Zinn-IV-oxids mit höchstens 2 % zweiwertigem Zinn und 0,1 bis 2,5 % Halogeniden, dadurch gekennzeichnet, daß man in an sich bekannter Weise aus Zinn-II-salzlösungen basische Zinn-II-verbindungen und/oder basische Zinn-II-hydroxide ausfällt, die Fällung in Gegenwart von 1 bis 70 Gew.-%, bezogen auf ausgefällte basische Zinn-II-verbindungen, Zinn-II-fluorid durchführt und die dotierten Fällungsprodukte von der Lösung abtrennt, auswäscht, bei Temperaturen von 100 bis 200° C trocknet, dann bei Temperaturen von 200 bis 700° C glüht und das Glühprodukt bis zum Erreichen der gewünschten Teilchengröße mahlt.

6. Verfahren zur Herstellung eines elektrisch leitfähigen Zinn-IV-oxids mit höchstens 2 % zweiwertigem Zinn und 0,1 bis 2,5 % Halogeniden, dadurch gekennzeichnet, daß man in wäßrige Zinn-II-halogenidlösungen 10 bis 100 Gew.-%, bezogen auf Zinn-II-halogenid, Alkylenoxid einleitet, die erhaltenen Fällungsprodukte von der Lösung abtrennt, auswäscht, bei Temperaturen von 100 bis 200° C trocknet, dann bei Temperaturen von 200 bis 700° C glüht und das Glühprodukt bis zum Erreichen der gewünschten Teilchengröße mahlt.

7. Verfahren nach Anspruch 6, dadurch gekennzeichnet, daß man als Alkylenoxid Ethylenoxid verwendet.

8. Verfahren zur Herstellung eines elektrisch leitfähigen Zinn-IV-oxids mit höchstens 2 % zweiwertigem Zinn und 0,1 bis 2,5 % Halogeniden, dadurch gekennzeichnet, daß man Mischungen von Zinn-II-oxid und Zinn-IV-oxid mit, bezogen auf Gemisch, bis zu 20 Gew.-% Zinn-II-halogeniden mahlend vermischt, das Gemisch in einem Temperaturbereich von 200 bis 700° C glüht und das Glühprodukt bis zum Erreichen der gewünschten Teilchengröße mahlt.

9. Verfahren nach Anspruch 1, 4, 5, 6 oder 8, dadurch gekennzeichnet, daß man das jeweils erhaltene Gemisch in einem Temperaturbereich von 300 bis 600° C glüht.

## Claims

1. Process for the preparation of an electroconductive tin (IV) oxide containing a maximum of 2% of divalent tin and from 0.1 to 2.5% of halides, characterized in that tin(II) oxide or tin(IV) oxide is mixed with, based on the mixture, up to 20% by weight of tin(II) fluoride or an equivalent amount of hydrofluoric acid with grinding, the mixture is ignited in a temperature range of from 200 to 700°C, and the ignition product is ground until the desired particle size has been reached.

2. Process according to Claim 1, characterized in that low-molecular-weight alcohols are added to the mixture of tin(II) oxide and tin(II) fluoride or hydrofluoric acid.

3. Process according to Claim 2, characterized in that methanol or ethanol is added to the mixture.

4. Process for the preparation of an electroconductive tin(IV) oxide containing a maximum of 2% of divalent tin and from 0.1 to 2.5% of halides, characterized in that first basic tin(II) compounds and/or basic tin(II) hydroxides are precipitated from tin(II) salt solutions in a manner known per se, the resultant precipitation products are washed a number of times and then stirred with from 5 to 70% by weight, based on the precipitated basic tin(II) compounds, of tin(II) fluoride in the form of an aqueous solution for a period of from 5 to 60 minutes, the doped precipitation products are separated from the solution, washed, dried at temperatures of from 100 to 200°C and then ignited at temperatures of from 200 to 700°C, and the ignition product is ground until the desired particle size has been reached.

5. Process for the preparation of an electroconductive tin(IV) oxide containing a maximum of 2% of divalent tin and from 0.1 to 2.5% of halides, characterized in that basic tin(II) compounds and/or basic tin(II) hydroxides are precipitated from tin(II) salt solutions in a manner known per se, the precipitation is carried out in the presence of from 1 to 70% by weight, based on the precipitated basic tin(II) compounds, of tin(II) fluoride, the doped precipitation products are separated from the solution, washed, dried at temperatures of from 100 to 200°C and then ignited at temperatures of from 200 to 700°C, and the ignition product is ground until the desired particle size has been reached.

6. Process for the preparation of an electroconductive tin(IV) oxide containing a maximum of 2% of divalent tin and from 0.1 to 2.5% of halides, characterized in that from 10 to 100% by weight, based on tin(II) halide, of alkylene oxide is passed into agueous tin(II) halide solutions, the resultant precipitation products are separated from the solution, washed, dried at temperatures of from 100 to 200°C and then ignited at temperatures of from 200 to 700°C, and the ignition product is ground until the desired particle size has been reached.

7. Process according to Claim 6, characterized in that the alkylene oxide used is ethylene oxide.

8. Process for the preparation of an electroconductive tin(IV) oxide containing a maximum of 2% of divalent tin and from 0.1 to 2.5% of halides, characterized in that mixtures of tin(II) oxide and tin(IV) oxide are mixed with, based on the mixture, up to 20% by weight of tin(II) halides with grinding, the mixture is ignited in a temperature range of from 200 to 700°C, and the ignition product is ground until the desired particle size has been reached.

9. Process according to Claim 1, 4, 5, 6 or 8, characterized in that the mixture obtained in each case is ignited in a temperature range of from 300 to 600°C.

## Revendications

1. Procédé de préparation d'un oxyde d'étain IV électroconducteur avec au plus 2 % d'étain bivalent et 0,1 à 2,5 % d'halogénures, caractérise en ce qu'on mélange, à l'état broyé, de l'oxyde d'étain II ou de l'oxyde d'étain IV avec, par rapport au mélange, jusqu'à 20 % en poids de fluorure d'étain II ou une quantité équivalente d'acide fluorhydrique, on calcine le mélange à une température située entre 200 et 700°C et on broie le produit calciné jusqu'à l'obtention de la dimension souhaitée de particules.

2. Procédé selon la revendication 1, caractérisé en ce qu'on ajoute des alcools de faible poids moléculaire au mélange d'oxyde d'étain II et de fluorure d'étain II ou d'acide fluorhydrique.

3. Procédé selon la revendication 2, caractérisé en ce qu'on ajoute du méthanol ou de l'éthanol au mélange.

4. Procédé de préparation d'un oxyde d'étain IV électroconducteur avec au plus 2 % d'étain bivalent et 0,1 à 2,5 % d'halogénures, caractérisé en ce qu'on fait d'abord précipiter, d'une manière connue en soi, des composés basiques d'étain II et/ou des hydroxydes basiques d'étain II dans des solutions de sel d'étain II, on lave plusieurs fois les produits précipités obtenus, ensuite on agite ceux-ci avec 5 à 70 % en poids de fluorure d'étain II, par rapport aux composés basiques d'étain II précipités, sous la forme d'une solution aqueuse, pendant 5 à 60 minutes, on sépare de la solution les produits précipités dopés, on les lave, on les fait sécher à des températures de 100 à 200°C, ensuite on les calcine à des températures de 200 à 700°C, et on broie le produit calciné jusqu'à l'obtention de la dimension souhaitée de particules.

5. Procédé de préparation d'un oxyde d'étain IV électroconducteur avec au plus 2 % d'étain bivalent et 0,1 à 2,5 % d'halogénures, caractérisé en ce qu'on fait précipiter, d'une manière connue en soi, des composés basiques d'étain II et/ou des hydroxydes basiques d'étain II dans des solutions de sel d'étain II, on effectue la précipitation en présence de 1 à 70 % en poids de fluorure d'étain II, par rapport aux composés basiques d'étain II précipités, on sépare de la solution les produits précipités dopés, on les lave, on les fait sécher à des températures de 100 à 200°C, ensuite on les calcine à des températures de 200 à 700°C et on broie le produit calciné jusqu'à l'obtention de la dimension souhaitée de particules.

6. Procédé de préparation d'un oxyde d'étain IV électroconducteur avec au plus 2 % d'étain bivalent et 0,1 à 2,5 % d'halogénures, caractérisé en ce qu'on introduit 10 à 100 % en poids d'oxyde d'alkylène, par rapport à l'halogénure d'étain II, dans des solutions aqueuses d'halogénure d'étain II, on sépare de la solution les produits précipités obtenus, on les lave, on les fait sécher à des températures de 100 à 200°C, ensuite on les calcine à des températures de 200 à 700°C et on broie le produit calciné jusqu'à l'obtention de la dimension souhaitée de particules.

7. Procédé selon la revendication 6, caractérisé en ce qu'on utilise, comme oxyde d'alkylène, l'oxyde d'éthylène.

8. Procédé de préparation d'un oxyde d'étain IV électroconducteur avec au plus 2 % d'étain bivalent et 0,1 à 2,5 % d'halogénures, caractérisé en ce qu'on mélange, à l'état broyé, des mélanges d'oxyde d'étain II et d'oxyde d'étain IV avec, par rapport au mélange, jusqu'à 20 % en poids d'halogénures d'étain II, on calcine le mélange à une température située entre 200 et 700°C, et on broie le produit calciné jusqu'à l'obtention de la dimension souhaitée de particules.

9. Procédé selon la revendication 1, 4, 5, 6 ou 8, caractérisé en ce qu'on calcine le mélange respectif obtenu à une température située entre 300 et 600°C.
